# EUROPEAN PATENT SPECIFICATION

(11) **EP 2 584 890 B1**
(45) Date of publication and mention of the grant of the patent: **25.07.2018**
(21) Application number: 11726114.9
(22) Date of filing: 10.06.2011
(51) Int. Cl.: A01J 25/06

(54) **APPARATUS FOR CUTTING AND/OR STIRRING CURD**
VORRICHTUNG ZUM SCHNEIDEN UND/ODER RÜHREN VON KÄSEBRUCH
APPAREIL PERMETTANT DE COUPER ET/OU D'AGITER LE CAILLÉ

(30) Priority: 28.06.2010 NL 1038072
(43) Date of publication of application: 01.05.2013
(73) Proprietor: Tetra Laval Holdings & Finance S.A., 1009 Pully (CH)
(72) Inventor: BOERTIEN, Arend, 7951 CX Staphorst (NL)
(74) Representative: Tetra Pak - Patent Attorneys SE
(86) International application number: PCT/EP2011/059690
(87) International publication number: WO 2012/000772

(56) References cited:
- WO-A1-2004/043656
- DE-A1- 2 002 428
- DE-U- 1 738 050
- FR-A1- 2 564 694
- NL-C2- 1 013 083
- US-A- 2 663 081
- US-A- 3 096 582

## Description

### Technical field

The invention relates to an apparatus for cutting and/or stirring curd or similar substance, comprising a curd vat having a rotatable drive shaft and at least one cutting frame extending radially from that drive shaft, which cutting frame comprises a frame for supporting a lattice of longitudinal knives which extend outwardly with respect to the drive shaft, and transverse knives which extend largely between those longitudinal knives.

### Background of the invention

Such an apparatus is known, inter alia, from 1 013 083 C2 (Tetra Laval). The apparatus known from that publication comprises a curd tank in which a rotatable drive shaft is situated which has a number of cutting frames extending radially from that drive shaft, which are mounted on the drive shaft in staggered relation. Each cutting frame comprises two parallel frame girders, which are mounted by one end on the drive shaft while the other end extends to a point near the wall of the tank. The tank can be disposed horizontally or vertically, the drive shaft then being likewise horizontal or vertical. Arranged between the frame girders is a lattice of longitudinal and transverse knives. The transverse knives extend parallel to the drive shaft, transversely to the frame girders and are welded to those frame girders. The longitudinal knives extend transversely to the drive shaft, parallel to the frame girders. The transverse knives form openings which are in line, in which the longitudinal knives are received with ample play in a form-closing manner, in other words, by which the longitudinal knives are caught with ample play in a form-closing manner. The objective envisaged with this known apparatus is to obtain a cutting frame that has fewer welded joints than a previously known, similar apparatus in which the transverse and longitudinal knives were welded to each other, so that it comprised many welds, which has as a disadvantage, inter alia, that all those welds need to be carefully polished in order to prevent accumulation of contaminants and bacterial growth and a local reduction of sharpness of knives.

From NL1015016 (Tetra Laval) a similar apparatus is known. In that publication it is proposed to provide at least a number of longitudinal knives at their outer end situated remote from the drive shaft, near the wall of the curd vat, with a knife end section which has at least one portion extending transversely to the longitudinal direction of the longitudinal knives, which is, for example, of T-shaped, U-shaped, L-shaped arcuate configuration. The objective envisaged with the provision of such knife end sections is to solve a problem occurring in previously known apparatuses, viz., that on the wall of the tank curd plaques may form, which are not carried along by the knives of the cutting frames. Such plaques often do come off the wall in a later stage, for instance during stirring, which follows cutting. If the plaques come off in such a late stage, comminution of the curd plaques takes place too late, which has an adverse effect on the homogeneity of the cheese to be produced, since the point of cutting the curd is to promote moisture egress; with plaques or chunks undergoing a cutting operation later than the rest of the curd, moisture egress sustains a delay, which has a direct influence on the homogeneity of the cheese to be produced.

### Summary

The objective of the present invention is to provide an apparatus and cutting frame, respectively, which provides further improvements with respect to the apparatus(es) known from the publications mentioned.

One aspect of the invention is providing a modification of the construction of the cutting frame, such that no welded joints at all are necessary anymore.

Another aspect is providing a modification of the construction of the cutting frame, such that the longitudinal knives can be of simpler design in that they do not need to be provided anymore with knife sections having at least one portion extending transversely to the longitudinal direction thereof, while the function thereof - carrying along curd plaques forming on the wall of the tank which are not carried along by the knives of the cutting frames -is yet preserved and is even significantly improved. Insofar as the knife sections are arranged on the ends of the longitudinal knives by means of welding (as is proposed in the description of the drawings of NL1015016), it is possible in the configuration according to the present invention to dispense with (undesirable) welded joints there too.

Further aspects and details will be addressed in the following and in the description of the drawings. There is provided an apparatus for cutting and/or stirring curd or similar substance, comprising a curd vat having a rotatable drive shaft and at least one cutting frame extending radially from that drive shaft, which cutting frame comprises a frame for supporting a lattice of longitudinal knives which extend outwardly with respect to the drive shaft, and transverse knives which extend largely between those longitudinal knives, wherein, according to the invention, the frame is preferably substantially U- or closed-shaped, for example, O- or rectangle-shaped, which frame comprises at least two side frame girders which on one side are directly or indirectly connected with the drive shaft and which on the other side are connected with each other by means of an outer transverse frame girder.
In this configuration the outer transverse frame girder can take over the function of the knife end sections in the apparatus known from NL1015016. Moreover, the outer transverse frame girder connected with the two side frame girders - or even forming an integral entity therewith - imparts such a stiffness to the frame (compared with the frame in the apparatus known from NL1013083 only consisting of two parallel side frame girders) that the necessity of using an (in fact undesirable) welded joint for connecting the transverse knives with the side frame girders can be eliminated and, in place thereof, a different connecting technique can be used which does not have the above-mentioned disadvantages of welded connections. Preferably, the transverse knives are caught (or received) by their ends by recesses provided in the side frame girders.

The longitudinal knives may - in a manner known per se from NL1013083 - be caught by recesses provided in the transverse knives or (as phrased by NL1013083) by the in-line openings formed by the transverse knives, in which the longitudinal knives are caught with ample play in a form-closing manner.

In a preferred embodiment which is attractive from the viewpoint of production technique, the longitudinal knives can be caught by recesses provided in the transverse knives, which are each open towards one side of the transverse knife, the transverse knives being mounted in the side frame girders in such a manner that the longitudinal knives are caught by transverse knives alternately having open sides of those recesses extending towards one and the other side.

Preferably, the recesses in the side frame girders and in the transverse knives, respectively, are form-closing in such a manner that substantial movements about the longitudinal axis ("rotation") of the transverse and longitudinal knives, respectively, are prevented, as well as - of course - undesirable transversal movements.

In general, the recesses will preferably be so dimensioned that the parts falling into them - in particular, the transverse and longitudinal knives, respectively - experience sufficiently ample play.

Preferably, the transverse knives and the recesses provided in the side frame girders are configured in a form-closing manner such that (also) substantial movements of the transverse knives in their longitudinal direction are prevented.

As regards the catching (i.e., the keeping in place and in the proper direction, respectively) of the longitudinal knives on the inner side (i.e., on the side of the drive shaft), the ends of the longitudinal knives proximal to the drive shaft can be directly or indirectly arrested by the drive shaft. Alternatively, the ends of the longitudinal knives proximal to the drive shaft can be directly or indirectly arrested by an inner transverse frame girder or inner transverse knife. In the inner transverse frame girder or the inner transverse knife, recesses may be provided, while the ends of the longitudinal knives proximal to the drive shaft and the recesses provided in the inner transverse frame girder and the inner transverse knife, respectively, are designed in a form-closing manner such that substantial movements of the longitudinal knives in their longitudinal direction towards the drive shaft or away from the drive shaft are prevented.

As regards the catching of the longitudinal knives on the outer side (i.e., on the side of the inner wall of the curd vat), the ends of the longitudinal knives remote from the drive shaft may be directly or indirectly arrested by the outer transverse frame girder. In the outer transverse frame girder or the outer transverse knife, recesses may be provided, while the ends of he longitudinal knives remote from the drive shaft and the recesses provided in the outer transverse frame girder and the outer transverse knife, respectively, are designed in a form-closing manner such that substantial movements of the longitudinal knives in their longitudinal direction towards the drive shaft or away from the drive shaft are prevented.

Preferably, the outer transverse frame girder comprises an at least slightly outwardly extending knife section over a substantial portion of the length of that outer transverse frame girder. With this feature - as may be assumed - a clear improvement is achieved regarding the problem indicated in the foregoing, of rendering loose and keeping loose the curd plaque against the inside of the cylindrical wall of the curd vat.

The above features may be applied in a cutting frame which is already present in an apparatus for cutting and/or stirring curd or similar substance or in a cutting frame which, although not forming part of such an apparatus yet, is intended and arranged for use in such an apparatus.

According to a first aspect a device according to claim 1 for cutting curd is provided. The device comprises a first longitudinal frame girder and a second longitudinal frame girder, each having a first end and a second end, a transversal frame girder attached to said first longitudinal frame girder and said second longitudinal frame girder, respectively, thereby forming a frame, a number of transversal knives placed between said first longitudinal frame girder and said second longitudinal frame girder, and a number of longitudinal knives held in place by said transversal frame girder and said transversal knives. Said first longitudinal frame girder and said second longitudinal frame girder are provided with recesses for receiving said transversal knives, and said transversal knives are provided with recesses for receiving said longitudinal knives.
The first end of said first longitudinal frame girder and said first end of said second longitudinal frame girder may be configured to be attached to a rotational shaft of a cheese vat, and the number of transversal knives may be held in place by said frame when said first end of said first longitudinal frame girder and said first end of said second longitudinal frame girder are attached to said rotational shaft.

The recesses in said transversal knives may be closed recesses.
The recesses in said transversal knives may be half-open recesses.
The ends of said transversal knives may be provided with protrusions and said first longitudinal frame girder and said second longitudinal frame girder may be provided with recesses for receiving said protrusions.

The ends of said longitudinal knives may be provided with protrusions and said transversal frame girder may be provided with recesses for receiving said protrusions.
The device may further comprise an inner transversal frame girder attached in the vicinity of said first end of said first longitudinal frame girder and said first end of said second longitudinal frame girder, respectively.
Ends of said longitudinal knives may be provided with protrusions and said inner transversal frame girder may be provided with holes for receiving said protrusions.
The device may further comprise a knife section attached to said transversal frame girder, such that curd close to an inside of said cheese vat is cut loose from said inside when said rotational shaft is rotated in a cutting direction. The knife section may comprise an end section, wherein an angle between said end section and said first longitudinal frame girder and said second longitudinal frame girder is more than 90 degrees. When said device is rotated in a stirring direction, opposite to said cutting direction, the curd is collected and compressed under the knife section.

According to a second aspect a cheese vat according to claim 9 is provided. The cheese vat comprises a cutting device according to the first aspect.

According to a third aspect a kit of parts according to claim 10 for a cutting device for a cheese vat is provided. The kit of parts comprises a number of longitudinal knives, and a number of transversal knives provided with recesses for receiving said longitudinal knives.

The recesses may be closed recesses.

The number of transversal knives may be configured to interact with a first longitudinal frame girder and a second longitudinal frame girder of the device according to the first aspect.

Ends of said transversal knives are provided with protrusions such that said transversal knives can be received by a first longitudinal frame girder and a second longitudinal frame girder provided with recesses for receiving said protrusions.
Ends of said longitudinal knives may be provided with protrusions such that said transversal knives can be received by a transversal frame girder provided with recesses for receiving said protrusions.

According to a fourth aspect but not according to the invention, a knife section is provided. The knife section may comprise a section directed towards said inside of said cheese vat, when being mounted on a frame of a cutting device for a cheese vat, such that curd is cut when a rotational shaft of said cheese vat is rotated in a cutting direction and such that said curd is collected and compressed when said rotational shaft is rotated in a stirring direction, said stirring direction being opposite to said cutting direction.
The knife section may comprise an end section, wherein an angle between said end section and said first longitudinal frame girder and said second longitudinal frame girder is more than 90 degrees.

According to a fifth aspect a method according to claim 13 for mounting knives in a cutting device for a cheese vat is provided. The method comprises placing a number of transversal knives between a first longitudinal frame girder and a second longitudinal frame girder, said number of transversal knives being received in recesses in said first longitudinal frame girder and in said second longitudinal frame girder, and placing a number of longitudinal knives by sliding said number of longitudinal knives into recesses of said number of transversal knives.

The wording longitudinal and transversal should be understood in its broadest sense as two directions perpendicular to each other, thus implicating that the longitudinal frame girders may be perpendicular to the rotational shaft as illustrated in the figures, but also parallel to the rotational shaft.

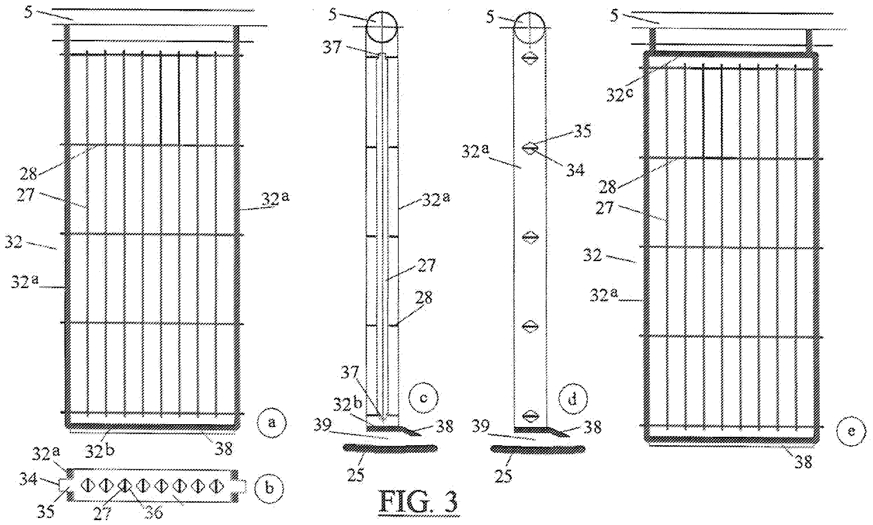

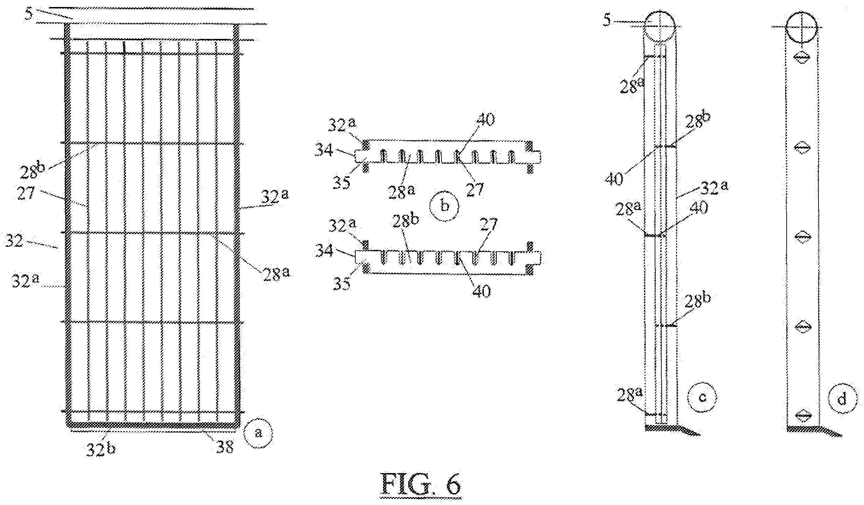

Further, recesses may be holes, as illustrated in fig 3-5, or cut outs, as illustrated in fig 6-7, but also grooves, though not illustrated.

### Brief description of the drawings

Below, the invention will be further discussed on the basis of a few exemplary embodiments, with reference to some drawings.
- Figures. 1a-b: schematically show a known apparatus for cutting and stirring curd;
- Figures 2a-c: schematically show a known cutting frame as used in the apparatus shown in Figures 1a-b;
- Figures 3a-e: schematically show a first and second exemplary embodiment of a cutting frame according to the invention;
- Figures 4a-g: schematically show a third and fourth exemplary embodiment of a cutting frame according to the invention;
- Figure 5: shows the exemplary embodiment shown in Figures 4a-d in perspective view;
- Figures 6a-d: schematically show a fifth exemplary embodiment of a cutting frame according to the invention;
- Figure 7: shows the exemplary embodiment shown in Figures 6a-d in perspective view.

### Detailed description of preferred embodiments

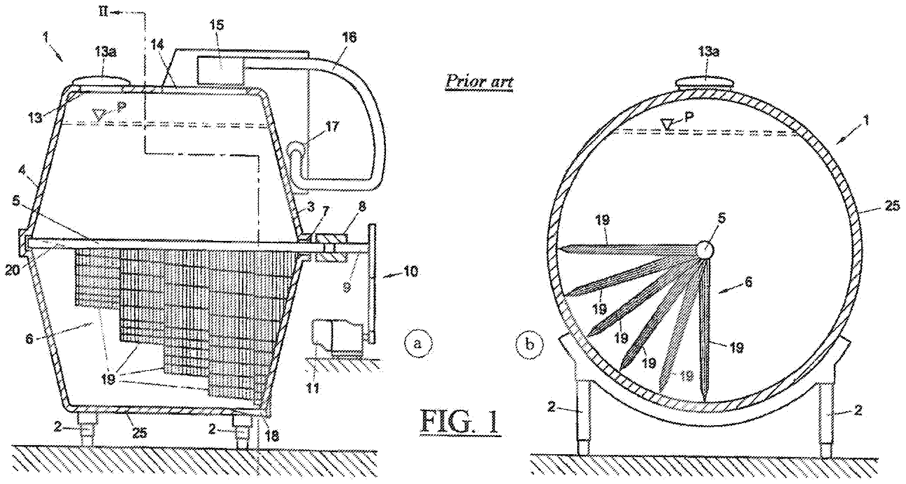

In Figs. 1a-b there is represented a known cylindrical horizontally disposed curd vat 1 which is supported by a number of legs 2. The end walls 3, 4 of the curd vat 1 are conical in this example, and through one of these end walls a drive shaft 5 extends centrally. This drive shaft, which in this example is bearing-mounted in the opposite end wall, supports a cutting/stirring element 6 for cutting and stirring curd. Arranged between the drive shaft 5 and the wall 3 through which the shaft 5 extends into the curd vat is a sealing element 7. Outside the curd vat, the drive shaft 5 is connected by means of a coupling 8 to a drive shaft 9, which is connected via transmission means 10 to a drive motor 11. The motor 11 is arranged for rotating the cutting/stirring element 6 around the centerline of the curd vat 1 alternately in one direction (stirring) and the other direction (cutting). In this example, the curd vat 1 in its upper part has a manhole 13 which is covered by a manhole cover 13a. Furthermore, in the upper part of the curd vat 1 an opening 14 is provided which is intended for immersion of a whey sieve 15 in the curd vat 1. The whey sieve 15 is supported by a bent pipe 16 which is rotatably connected to the curd vat 1 at 17. The curd vat 1 has an outlet 18 at its lowest part. With P the customary level of the curd in the curd vat is indicated. The cutting/stirring element 6 comprises a number of cutting frames 19 which, next to each other, are connected with the drive shaft 5 and extend from the drive shaft 5 into the proximity of the inner side of the cylindrical vat wall 25. In the embodiment shown, the cutting/stirring element comprises six cutting frames 19. The number of cutting frames 19 depends on the size of the curd vat. The cutting frames 19 are connected with the drive shaft so as to mutually form angles with each other, as can be clearly seen in Fig. 1b, and are placed along the drive shaft 5 so as to extend outwardly from the shaft in staggered relation. Each of the cutting frames 19 may further be fitted at an angle with respect to the centerline of the drive shaft 5, as is illustrated in Fig. 1a by a broken line 20 indicating (the position of) the cutting frame 19 which is located farthest to the left (and is concealed by the drive shaft 5). It is noted that the present invention can also be applied to differently designed curd vats and apparatuses having a similar function, i.e., cutting and/or stirring curd or similar substances.

Thus, Figs. 1a-b show a (known) apparatus for cutting and/or stirring curd or similar substance, comprising a curd vat 1 having a rotatable drive shaft 5 and at least one cutting frame 19 extending radially from that drive shaft.

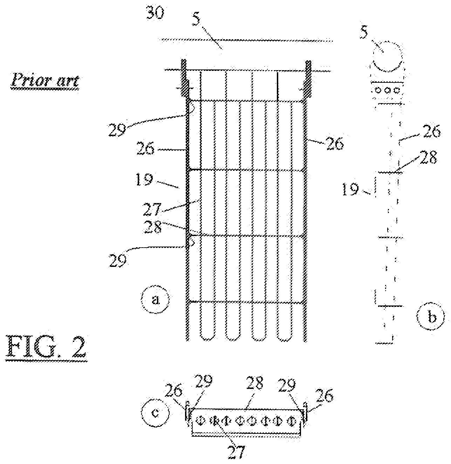

Figs. 2a-c show schematically, in three views/sections, a known cutting frame 19 such as used in the apparatus shown in Figs. 1a-b. The known cutting frame 19 comprises a frame, in the form of two free-standing, parallel frame girders 26, for supporting a lattice of longitudinal knives 27, which extend outwardly with respect to the drive shaft 5, and transverse knives 28, which largely extend between those longitudinal knives. The transverse knives are welded to the frame girders 26 by means of welds 29. The ends of the longitudinal knives comprise transversely bent knife end sections 30 which are intended to counteract the formation of curd plaque on the inner side of the vat wall 25 (see Figs. 1a-b).

Figs. 3a-e show schematically (in different views/sections) a first exemplary embodiment of a cutting frame according to the invention, in which the frame 32 is U-shaped and comprises two side frame girders 32a which on one side are connected, directly or indirectly (for example, via projections welded on the drive shaft 5, see e.g. Fig. 2), with the drive shaft 5 and which - in contrast with the configuration from Fig. 2 - on the other side (in Fig. 3a the lower side) are connected with each other by means of an outer transverse frame girder 32b.

Fig. 3e shows an alternative embodiment of the frame 32, which is closed-shaped there in that the side frame girders 32a, as well as being connected with each other at the lower side (the outer side) via the outer transverse frame girder 32b, are also connected with each other at the upper side (the inner side), viz., by means of an inner transverse frame girder 32c. The frame 32 is thus closed-shaped, viz., more or less O- and/or rectangle-shaped.

In contrast with the known cutting frame, the transverse knives are not welded by their ends to the side frame girders 31a, but the transverse knives 28 are caught by their ends 34 by recesses 35 provided in the side frame girders 32a. Those recesses 35 are, for example, more or less, square-shaped, at an angle of 45°, and the ends 34 are caught therein in a form-closing manner with sufficient play. As is the case with the known cutting frame, the longitudinal knives 27 are caught by recesses 36 provided in the transverse knives 28, in which they are caught in a form-closing manner with sufficient play. The recesses 35 in the side frame girders and the recesses 36 in the transverse knives 28 are designed in a form-closing manner such that substantial (rotation) movements about the longitudinal axis of the transverse and longitudinal knives, respectively, are prevented. In other words, in this way, the transverse and longitudinal knives, respectively, preserve the proper position for stirring and cutting of the curd, viz., in the direction of movement of the cutting frame around the rotating drive shaft 5.

The transverse knives and the recesses provided in the side frame girders are designed in a form-closing manner such that also substantial movements of the transverse knives 28 in longitudinal direction are prevented. Thus, the width of the ends 34 of the transverse knives 28 is smaller than that of the intermediate area of those transverse knives 28, so that the transverse knives 28 are caught and locked between the two side frame girders 32a. Similarly, the longitudinal knives 27 are caught and locked, viz., in that - as Fig. 3c shows - the width of the ends 37 of the longitudinal knives 27 is narrower than the intermediate part, those ends 37 falling into recesses, provided in the - with respect to the rotation movement around the drive shaft 5 - inner (upper in the figures) and outer (lower in the figures) transverse knife, that are smaller than the corresponding recesses in the intermediate transverse knives 28.

In the exemplary embodiments discussed above and to be discussed below, the outer transverse frame girder 32b - as is schematically represented in the figures - may be so designed that it comprises an at least slightly outwardly (in a direction away from the drive shaft) extending knife section 38 - or is connected therewith - over a substantial portion of the length (i.e., the distance between the two side frame girders 32a, parallel to the drive shaft 5) of that outer transverse frame girder. What is achieved by that obliquely outwardly (in the direction of the cylindrical curd vat wall 25, see Fig. 1b) directed position of the knife section 38 over practically the full width of the cutting frame, is that the curd which is between the knife section 38 and the vat wall 25, upon the stirring movement of the cutting frame - with the knife section 38, seen in the figures, moving from right to left - is compressed, while that curd (plaque) upon the cutting movement of the cutting frame - with the knife section 38, seen in the figures, moving from left to right - is cut loose and - in that behind the knife section 38, i.e., on the (in the figures) left hand, indicated with 39, a reduced pressure is created - the curd plaque is thereby pulled off the vat wall 25.

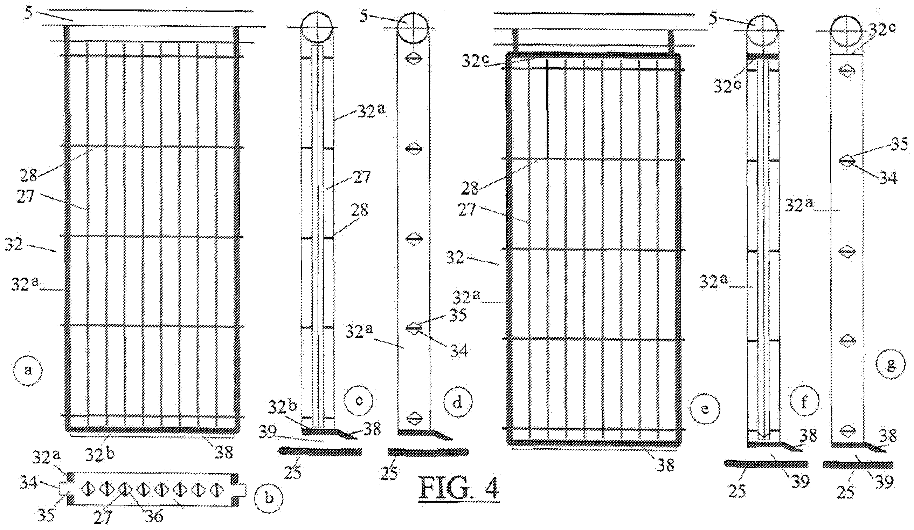

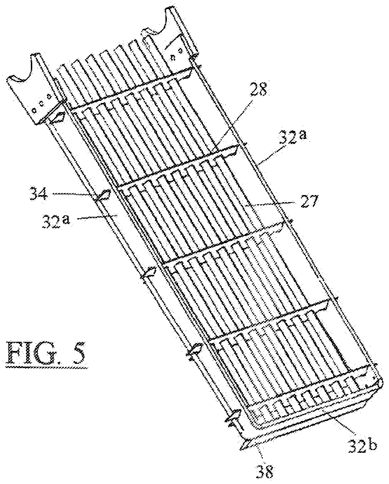

Figs. 4a-g schematically show an embodiment in which the ends of the longitudinal knives 27 proximal to the drive shaft 5 are arrested (stopped) by the drive shaft 5, as shown in Figs. 4a-d, or a variant, shown in Figs. 4e-g, in which the ends of the longitudinal knives 27 proximal to the drive shaft 5 are arrested by an inner (upper in the figures) transverse frame girder 32c or inner transverse knife (in which no openings need to be provided then). In the embodiments shown in Figs. 4a-g and 5, ends of the longitudinal knives remote from the drive shaft 5 are arrested by the outer transverse frame girder 32b or the outer transverse knife (in which no openings need to be provided then). With the embodiment shown in Figs. 4a-g, the necessity of providing narrowed ends 37 of the longitudinal knives 27 and inner and outer transverse knives by which those narrowed ends are locked in a form-closing manner, is eliminated.

Fig. 5 shows the exemplary embodiment shown in Figs. 4a-d in perspective view.

Figs. 6a-d schematically show a fifth exemplary embodiment of a cutting frame according to the invention, in which the longitudinal knives 27 are caught by recesses provided in the transverse knives 28 (here indicated by 28a/b) which do not, as in the known cutting frame and also in the cutting frames according to the preceding exemplary embodiments, have closed openings (recesses) 36, but have half-open recesses 40 which are each open towards one side of the transverse knife 28a/b. The transverse knives 28a/b are then alternately mounted in the side frame girders 32a (with their narrowed ends 34 locked in the recesses 35), such that the longitudinal knives 27 are caught by transverse knives 28a/b alternately having open sides of those recesses extending to one and the other side. This embodiment with half-open, alternately mounted transverse knives 28a/b provides advantages in particular as regards the assembly of the cutting frames, since the longitudinal knives 27 here do not need to be inserted through the (closed) openings in the transverse knives 27. Further, this is also a construction which is beneficial to hygiene, since it is less susceptible of accumulation of curd residues, bacteria, etc., and can be hosed clean better.

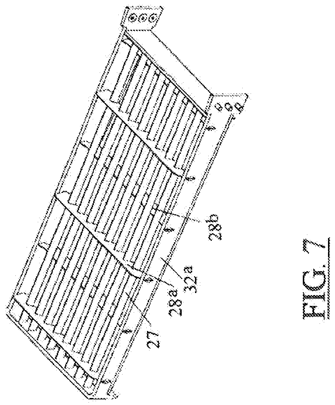

In Fig. 7 the exemplary embodiment shown in Figs. 6a-d is shown in perspective view.

Thus, there is provided, in different variants, an apparatus and cutting frame, respectively, which provides some clear constructional as well as process-technical improvements over the known apparatus. Owing to the proposed modification of the construction of the cutting frame, there are no welded joints necessary anymore (apart from any connecting pieces between the cutting frame proper and the drive shaft 5). Further, the longitudinal knives 27 can be of simpler design than those in the known apparatus, viz., in that they are not provided anymore with (bent or welded-on) knife sections having portions extending transversely to the longitudinal direction thereof, while the function thereof - carrying along curd plaques forming on the wall of the tank or vat which are not carried along by the knives of the cutting frames - is yet preserved, indeed appreciably improved, in particular by virtue of the outwardly extending knife section 38 virtually throughout the width of the cutting frame.

The invention may be describes as an apparatus for cutting and/or stirring curd or similar substance, comprising a curd vat 1 having a rotatable drive shaft 5 and at least one cutting frame 19 extending radially from that drive shaft,which cutting frame comprises a frame for supporting a lattice of longitudinal knives 27 which extend outwardly with respect to the drive shaft, and transverse knives 28 which extend largely between those longitudinal knives, wherein the frame 32 is substantially U- or closed-shaped, at least comprising two side frame girders 32a which on one side are directly or indirectly connected with the drive shaft and which on the other side are connected with each other via an outer transverse frame girder 32b.

The transverse knives 28 can be caught by their ends 34 by recesses 35 provided in the side frame girders.

The longitudinal knives 27 can be caught by recesses 36, 40 provided in the transverse knives 28.

The longitudinal knives 27 can be caught by recesses 40 provided in the transverse knives 28, which are each open towards one side of the transverse knife, wherein the transverse knives can be mounted in the side frame girders such that the longitudinal knives can be caught by transverse knives alternately having open sides of those recesses extending to one and the other side.

The recesses 35, 36, 40 in the side frame girders and in the transverse knives, respectively, can be designed in a form-closing manner such that substantial movements about the longitudinal axis of the transverse and longitudinal knives, respectively, are prevented.

The transverse knives and the recesses provided in the side frame girders can be designed in a form-closing manner 34, 35 such that substantial movements of the transverse knives in their longitudinal direction are prevented.

The ends of the longitudinal knives 27 proximal to the drive shaft 5 can be directly or indirectly arrested by the drive shaft.

The ends of the longitudinal knives proximal to the drive shaft can be directly or indirectly arrested by an inner transverse frame girder 32c or inner transverse knife 28.

In an inner transverse frame girder 32c or inner transverse knife 28 recesses can be provided, wherein the ends 37 of the longitudinal knives 27 proximal to the drive shaft and the recesses provided in the inner transverse frame girder and the inner transverse knife, respectively, can be designed in a form-closing manner such that substantial movements of the longitudinal knives in their longitudinal direction towards the drive shaft or away from the drive shaft are prevented.

The ends of the longitudinal knives remote from the drive shaft can be directly or indirectly arrested by the outer transverse frame girder 32b or the outer transverse knife 28.

The outer transverse frame girder 32b or the outer transverse knife 28 recesses can be provided, wherein the ends 37 of the longitudinal knives remote from the drive shaft and the recesses provided in the outer transverse frame girder and the outer transverse knife, respectively, can be designed in a form-closing manner such that substantial movements of the longitudinal knives in their longitudinal direction towards the drive shaft or away from the drive shaft are prevented.

The outer transverse frame girder 32b can comprise an at least slightly outwardly extending knife section 38, or is connected therewith, over a substantial portion of the length of that outer transverse frame girder.

Further, a cutting frame arranged for use in an apparatus as described above may be provided.

## Claims

1. A device for cutting curd, said device comprising
a first longitudinal frame girder (32a) and a second longitudinal frame girder (32a), each having a first end and a second end,
a transversal frame girder (32b) attached to said first longitudinal frame girder and said second longitudinal frame girder, respectively, thereby forming a frame,
a number of transversal knives (28) placed between said first longitudinal frame girder (32a) and said second longitudinal frame girder (32a),
a number of longitudinal knives (27) held in place by said transversal frame girder (32b) and said transversal knives (28), wherein said first longitudinal frame girder (32a) and said second longitudinal frame girder (32a) are provided with recesses (35) for receiving said transversal knives, and
said transversal knives (28) are provided with recesses (40) for receiving said longitudinal knives.

2. The device according to claim 1, wherein said first end of said first longitudinal frame girder and said first end of said second longitudinal frame girder are configured to be attached to a rotational shaft of a cheese vat, and wherein said number of transversal knives are held in place by said frame when said first end of said first longitudinal frame girder and said first end of said second longitudinal frame girder are attached to said rotational shaft.

3. The device according to any one of the preceding claims,
wherein ends of said transversal knives are provided with protrusions and said first longitudinal frame girder and said second longitudinal frame girder are provided with recesses for receiving said protrusions.

4. The device according to any one of the preceding claims,
wherein ends of said longitudinal knives are provided with protrusions and said transversal frame girder is provided with recesses for receiving said protrusions.

5. The device according to any one of the preceding claims, further comprising an inner transversal frame girder attached in the vicinity of said first end of said first longitudinal frame girder and said first end of said second longitudinal frame girder, respectively.

6. The device according to claim 5, wherein ends of said longitudinal knives are provided with protrusions and said inner transversal frame girder is provided with recesses for receiving said protrusions.

7. The device according to any one of the preceding claims, further comprising a knife section attached to said transversal frame girder, such that curd close to an inside of said cheese vat is cut loose from said inside when said rotational shaft is rotated in a cutting direction.

8. The device according to claim 7, wherein said knife section comprises an end section, wherein an angle between said end section and said first longitudinal frame girder and said second longitudinal frame girder is more than 90 degrees.

9. A cheese vat comprising a cutting device according to any one of the claims 1 to 8.

10. A kit of parts for a cutting device for a cheese vat, said kit of parts comprising
a number of longitudinal knives (27), and
a number of transversal knives (28) provided with recesses (40) for receiving said longitudinal knives (27), **characterized in that** ends of said transversal knives (28) are provided with protrusions such that said transversal knives (28) can be received by a first longitudinal frame girder (32a) and a second longitudinal frame girder (32a) provided with recesses (35) for receiving said protrusions..

11. The kit of parts according to claim 10, wherein said number of transversal knives are configured to interact with a first longitudinal frame girder and a second longitudinal frame girder of a device according to any one of the claims 1 to 8.

12. The kit of parts according to claim 10 or 11, wherein ends of said longitudinal knives are provided with protrusions such that said transversal knives can be received by a transversal frame girder provided with recesses for receiving said protrusions.

13. A method for mounting knives in a cutting device for a cheese vat, said method comprising
placing a number of transversal knives (28) between a first longitudinal frame girder (32a) and a second longitudinal frame girder (32a), said number of transversal knives (28) being received in recesses (35) in said first longitudinal frame girder (32a) and in said second longitudinal frame girder (32a), and
placing a number of longitudinal knives (27) by sliding said number of longitudinal knives(27) into recesses (40) of said number of transversal knives (28).

## Patentansprüche

1. Vorrichtung zum Schneiden von Käsebruch, wobei die Vorrichtung aufweist
einen ersten longitudinalen Rahmenträger (32a) und einen zweiten longitudinalen Rahmenträger (32a), wobei jeder ein erstes Ende und ein zweites Ende aufweist, einen quer verlaufenden Rahmenträger (32b), welcher an dem ersten longitudinalen Rahmenträger und dem zweiten longitudinalen Rahmenträger jeweils befestigt ist, wodurch ein Rahmen gebildet wird,
eine Anzahl von quer verlaufenden Messern (28), welche zwischen dem ersten longitudinalen Rahmenträger (32a) und dem zweiten longitudinalen Rahmenträger (32a) angeordnet sind,
eine Anzahl von longitudinalen Messern (27), welche durch die quer verlaufenden Rahmenträger (32b) und die quer verlaufenden Messer (28) an Ort und Stelle gehalten wird,
wobei
der erste longitudinale Rahmenträger (32a) und der zweite longitudinale Rahmenträger (32a) mit Ausnehmungen (35) zur Aufnahme der quer verlaufenden Messer versehen ist, und
die quer verlaufenden Messer (28) mit Aussparungen (40) zur Aufnahme der longitudinalen Messer versehen sind.

2. Vorrichtung nach Anspruch 1, wobei das erste Ende des ersten longitudinalen Rahmenträgers und das erste Ende des zweiten longitudinalen Rahmenträgers dafür ausgelegt sind, um an einer Drehwelle eines Käsebottichs befestigt zu werden, und wobei die Anzahl von quer verlaufenden Messern durch den Rahmen an Ort und Stelle gehalten wird, wenn das erste Ende des ersten longitudinalen Rahmenträgers und das erste Ende des zweiten longitudinalen Rahmenträgers an der Drehwelle befestigt sind.

3. Vorrichtung nach einem der vorhergehenden Ansprüche, wobei Enden der quer verlaufenden Messer mit Vorsprüngen versehen sind und der erste longitudinale Rahmenträger und der zweite longitudinale Rahmenträger mit Aussparungen zur Aufnahme der Vorsprünge versehen sind.

4. Vorrichtung nach einem der vorhergehenden Ansprüche, wobei Enden der longitudinalen Messer mit Vorsprüngen versehen sind und der quer verlaufende Rahmenträger mit Aussparungen zur Aufnahme der Vorsprünge versehen ist.

5. Vorrichtung nach einem der vorhergehenden Ansprüche, weiter aufweisend einen inneren, quer verlaufenden Rahmenträger, welcher in der Nähe des ersten Endes des ersten longitudinalen Rahmenträgers und des ersten Endes des zweiten longitudinalen Rahmenträgers jeweils befestigt ist.

6. Vorrichtung nach Anspruch 5, wobei Enden der longitudinalen Messer mit Vorsprüngen versehen sind und der innere, quer verlaufende Rahmenträger mit Aussparungen zur Aufnahme der Vorsprünge versehen ist.

7. Vorrichtung nach einem der vorhergehenden Ansprüche, weiter aufweisend einen Messerabschnitt, welcher an dem quer verlaufenden Rahmenträger befestigt ist, so dass Käsebruch dicht an einer Innenseite des Käsebottichs von der Innenseite losgerissen wird, wenn die Drehwelle in einer Schneidrichtung gedreht wird.

8. Vorrichtung nach Anspruch 7, wobei der Messerabschnitt einen Endabschnitt aufweist, wobei ein Winkel zwischen dem Endabschnitt und dem ersten longitudinalen Rahmenträger und dem zweiten longitudinale Rahmenträger größer als 90 Grad ist.

9. Käsebottich, aufweisend eine Schneidvorrichtung nach einem der Ansprüche 1 bis 8.

10. Ausrüstungsteile für eine Schneidvorrichtung für einen Käsebottich, wobei die Ausrüstungsteile aufweisen eine Anzahl von longitudinalen Messern (27), und
eine Anzahl von quer verlaufenden Messern (28), welche mit Aussparungen (40) zur Aufnahme der longitudinalen Messer (27) versehen sind,
**dadurch gekennzeichnet, dass** Enden der quer verlaufenden Messer (28) mit Vorsprüngen versehen sind, so dass die quer verlaufenden Messer (28) durch einen ersten longitudinalen Rahmenträger (32a) und einen zweiten longitudinalen Rahmenträger (32a), welche mit Aussparungen (35) zur Aufnahme der Vorsprünge versehen sind, aufgenommen werden können.

11. Ausrüstungsteile nach Anspruch 10, wobei die Anzahl von quer verlaufenden Messern dafür ausgelegt ist, mit einem ersten longitudinalen Rahmenträger und einem zweiten longitudinalen Rahmenträger einer Vorrichtung nach einem der Ansprüche 1 bis 8 zu interagieren.

12. Ausrüstungsteile nach Anspruch 10 oder 11, wobei Enden der longitudinalen Messer mit Vorsprüngen versehen sind, so dass die quer verlaufenden Messer von einem quer verlaufende Rahmenträger aufgenommen werden können, welcher mit Aussparungen zur Aufnahme der Vorsprünge versehen ist.

13. Verfahren zum Montieren von Messern in einer Schneidevorrichtung für einen Käsebottich, wobei das Verfahren aufweist
Anordnen einer Anzahl von quer verlaufenden Messern (28) zwischen einem ersten longitudinalen Rahmenträger (32a) und einem zweiten longitudinalen Rahmenträger (32a), wobei die Anzahl von quer verlaufenden Messern (28) in Aussparungen (35) in dem ersten longitudinalen Rahmenträger (32a) und dem zweiten longitudinalen Rahmenträger (32a) aufgenommen wird, und
Anordnen einer Anzahl von longitudinalen Messern (27) durch Einschieben der Anzahl von longitudinalen Messern (27) in Aussparungen (40) der Anzahl von quer verlaufenden Messern (28).

## Revendications

1. Dispositif permettant de couper le caillé, ledit dispositif comprenant
une première poutre de cadre longitudinale (32a) et une deuxième poutre de cadre longitudinale (32a), chacune ayant une première extrémité et une deuxième extrémité,
une poutre de cadre transversale (32b) attachée à ladite première poutre de cadre longitudinale et à ladite deuxième poutre de cadre longitudinale, respectivement, pour ainsi former un cadre,
une pluralité de couteaux transversaux (28) placés entre ladite première poutre de cadre longitudinale (32a) et ladite deuxième poutre de cadre longitudinale (32a),
une pluralité de couteaux longitudinaux (27) maintenus en place par ladite poutre de cadre transversale (32b) et lesdits couteaux transversaux (28),
ladite première poutre de cadre longitudinale (32a) et ladite deuxième poutre de cadre longitudinale (32a) étant pourvues de renfoncements (35) pour recevoir lesdits couteaux transversaux, et
lesdits couteaux transversaux (28) étant pourvus de renfoncements (40) pour recevoir lesdits couteaux longitudinaux.

2. Dispositif selon la revendication 1, dans lequel ladite première extrémité de ladite première poutre de cadre longitudinale et ladite première extrémité de ladite deuxième poutre de cadre longitudinale sont configurées pour être attachées à un arbre rotatif d'une cuve à fromage, et dans lequel ladite pluralité de couteaux transversaux sont maintenus en place par ledit cadre lorsque ladite première extrémité de ladite première poutre de cadre longitudinale et ladite première extrémité de ladite deuxième poutre de cadre longitudinale sont attachées audit arbre rotatif.

3. Dispositif selon l'une quelconque des revendications précédentes, dans lequel des extrémités desdits couteaux transversaux sont pourvues de saillies et ladite première poutre de cadre longitudinale et ladite deuxième poutre de cadre longitudinale sont pourvues de renfoncements pour recevoir lesdites saillies.

4. Dispositif selon l'une quelconque des revendications précédentes, dans lequel des extrémités desdits couteaux longitudinaux sont pourvues de saillies et ladite poutre de cadre transversale est pourvue de renfoncements pour recevoir lesdites saillies.

5. Dispositif selon l'une quelconque des revendications précédentes, comprenant en outre une poutre de cadre transversale interne attachée à proximité de ladite première extrémité de ladite première poutre de cadre longitudinale et de ladite première extrémité de ladite deuxième poutre de cadre longitudinale, respectivement.

6. Dispositif selon la revendication 5, dans lequel des extrémités desdits couteaux longitudinaux sont pourvues de saillies et ladite poutre de cadre transversale interne est pourvue de renfoncements pour recevoir lesdites saillies.

7. Dispositif selon l'une quelconque des revendications précédentes, comprenant en outre une section à couteaux attachée à ladite poutre de cadre transversale de telle sorte que du caillé proche de l'intérieur de ladite cuve à fromage soit détaché dudit intérieur lorsque ledit arbre rotatif tourne dans une direction de coupe.

8. Dispositif selon la revendication 7, dans lequel ladite section à couteaux comprend une section d'extrémité, un angle entre ladite section d'extrémité et ladite première poutre de cadre longitudinale et ladite deuxième poutre de cadre longitudinale étant supérieur à 90°.

9. Cuve à fromage comprenant un dispositif de coupe selon l'une quelconque des revendications 1 à 8.

10. Kit de pièces pour un dispositif de coupe pour une cuve à fromage, ledit kit de pièces comprenant une pluralité de couteaux longitudinaux (27), et une pluralité de couteaux transversaux (28) pourvus de renfoncements (40) pour recevoir lesdits couteaux longitudinaux (27),
**caractérisé en ce que** des extrémités desdits couteaux transversaux (28) sont pourvues de saillies de telle sorte que lesdits couteaux transversaux (28) puissent être reçus par une première poutre de cadre longitudinale (32a) et une deuxième poutre de cadre longitudinale (32a) pourvues de renfoncements (35) pour recevoir lesdites saillies.

11. Kit de pièces selon la revendication 10, dans lequel ladite pluralité de couteaux transversaux sont configurés pour interagir avec une première poutre de cadre longitudinale et une deuxième poutre de cadre longitudinale d'un dispositif selon l'une quelconque des revendications 1 à 8.

12. Kit de pièces selon la revendication 10 ou 11, dans lequel des extrémités desdits couteaux longitudinaux sont pourvues de saillies de telle sorte que lesdits couteaux transversaux puissent être reçus par une poutre de cadre transversale pourvue de renfoncements pour recevoir lesdites saillies.

13. Procédé pour monter des couteaux dans un dispositif de coupe pour une cuve fromage, ledit procédé comprenant les étapes consistant à placer une pluralité de couteaux transversaux (28) entre une première poutre de cadre longitudinale (32a) et une deuxième poutre de cadre longitudinale (32a), ladite pluralité de couteaux transversaux (28) étant reçus dans des renfoncements (35) dans ladite première poutre de cadre longitudinale (32a) et dans ladite deuxième poutre de cadre longitudinale (32a), et
placer une pluralité de couteaux longitudinaux (27) en faisant coulisser ladite pluralité de couteaux longitudinaux (27) dans des renfoncements (40) de ladite pluralité de couteaux transversaux (28) .
